Europäisches Patentamt

**European Patent Office**

**Office européen des brevets**

(11) Numéro de publication: **0 071 551**
**A1**

(12) # DEMANDE DE BREVET EUROPEEN

(21) Numéro de dépôt: **82420106.5**

(22) Date de dépôt: **28.07.82**

(51) Int. Cl.³: **F 16 L 59/16**

(30) Priorité: **31.07.81 FR 8115243**

(43) Date de publication de la demande:
**09.02.83 Bulletin 83/6**

(84) Etats contractants désignés:
**DE GB IT NL SE**

(71) Demandeur: **VALLOUREC Société Anonyme dite.**
**7, place du Chancelier Adenauer**
**F-75116 Paris(FR)**

(72) Inventeur: **Jean, Bernard**
**59 avenue Jean-Jaurès**
**F-59600 Maubeuge(FR)**

(72) Inventeur: **Grare, Didier**
**24, Allée des Grands Chênes**
**F-59620 Aulnoye(FR)**

(74) Mandataire: **de Passemar, Bernard**
**VALLOUREC 98, Bd. Victor Hugo**
**F-92115 Clichy(FR)**

(54) **Elément de tube préfabriqué pour canalisations de transport de fluide à température différente de l'ambiante.**

(57) Le procédé suivant l'invention concerne le transport des fluides à température différente de l'ambiante. Il concerne en particulier le transport de l'eau chaude sous pression, ou de la vapeur.

Dans ce procédé on fait appel à des éléments préfabriqués comportant deux tubes métalliques concentriques dont les extrémités sont solidarisées par une liaison rigide et étanche.

De préférence, un isolant thermique est logé dans l'intervalle entre les deux tubes.

Ce procédé s'applique à la réalisation de canalisations qui ne comportent pas de dispositifs compensateurs de dilatation ou qui en comportent seulement un nombre réduit.

FIG.1

EP 0 071 551 A1

PROCEDE DE REALISATION DE CANALISATIONS DE TRANSPORT
DE FLUIDE A TEMPERATURE DIFFERENTE DE L'AMBIANTE.

Le procédé suivant l'invention concerne de la façon la plus générale les canalisations de transport de fluides sous pression liquides ou gazeux, à température différente de l'ambiante, tels que de l'eau, de la vapeur, des mélanges eau-vapeur, des gaz liquéfiés, des hydrocarbures ou encore toute sorte de fluides dont on se propose de réduire les échanges thermiques avec l'extérieur.

Le procédé suivant l'invention concerne en particulier les réseaux de transport d'eau chaude, de vapeur d'eau ou de mélanges eau/vapeur pour la distribution de chaleur principalement en milieu urbain. L'invention concerne aussi des éléments de tubes préfabriqués pour la mise en oeuvre du procédé suivant l'invention.

Il est connu que le transport de fluides à température différente de l'ambiante présente un certain nombre de difficultés spécifiques. Ces difficultés sont liées entre autres : à la température des fluides transportés qui induit des dilatations ou contractions des tubes utilisés pour le transport et impose de réaliser une isolation thermique aussi efficace que possible entre le fluide transporté et le milieu extérieur, aux problèmes de corrosion rencontrés et à la nécessité de garantir la tenue générale en service dans le temps des canalisations de fluide travaillant dans ces conditions.

Par ailleurs, en ce qui concerne le transport d'eau chaude, les réseaux de transport qui se développent actuellement visant à l'utilisation économique de l'énergie résiduelle des centrales génératrices d'électricité, les températures de l'eau transportée sont de plus en plus élevées. C'est ainsi qu'on atteint dans ces réseaux des températures d'eau ou de vapeur d'eau supérieures à 100°C et allant couramment de 110 à 200°C avec des pressions pouvant dépasser 30 bars.

Dans ces conditions, l'expérience a montré que le mode traditionnel de réalisation des canalisations d'eau chaude exploité par exemple pour le chauffage urbain, mais à température d'eau inférieure aux valeurs ci-dessus, par exemple 70°C, n'est pas satisfaisant.

Une solution consiste à utiliser un tuyau en fonte ductile, protégé par un calorifuge et un revêtement extérieur classique, la jonction des tuyaux entre eux pour faire une canalisation étant réalisée au moyen d'un emboîtement dans lequel vient se loger un joint en élastomère permettant au tuyau de se dilater en service.

D'autres méthodes consistent en général à joindre bout à bout des tubes, le plus souvent en acier, en interposant de distance en distance des dispositifs compensateurs de dilatation constitués par exemple par des tubes ondulés ou des lyres. Des précautions particulières doivent être prises pour permettre aux tubes de se déplacer sous l'action des contraintes de dilatation ou de contraction.

L'isolation thermique est assurée en enroulant autour de ces tubes des bandes isolantes à base de laine de verre ou d'une matière plastique expansée, puis en gainant enfin le tube ainsi revêtu d'une enveloppe mince en matière plastique ou en acier galvanisé, qui est fermée par exemple par soudage ou encore rendue étanche au moyen d'un mastic convenable.

Pour améliorer encore l'isolement et surtout pour s'adapter à des contraintes techniques ou administratives, on loge souvent les tubes dans des caniveaux creusés dans le sol et dont les parois peuvent alors comporter un revêtement intérieur isolant.

L'expérience a montré que ce mode de réalisation nécessite une mise en place longue et coûteuse et conduit souvent à des mécomptes dûs à une fissuration prématurée des compensateurs de dilatation, ou encore à des ruptures au niveau des raccords entre les tubes à la suite de contraintes de dilatation trop importantes. L'expérience a aussi montré que la gaine extérieure ne présente pas toujours une étanchéité suffisante ; la couche d'isolation thermique qui entoure les tubes peut alors s'imprégner peu à peu d'eau, et devenir davantage conductrice. On constate dans ce cas que les pertes thermiques de la canalisation croissent en fonction du temps.

Pour résoudre une partie de ces difficultés, le FR 2.398.253, propose de réaliser les conduites métalliques calorifuges pour le transport de fluides chauds en utilisant deux tubes métalliques concentriques, le tube extérieur étanche étant constitué d'éléments de longueur courante soudés bout à bout et n'étant pas en contact direct avec le tube intérieur qui assure le transport du fluide et est lui-même constitué d'éléments de longueur courante soudés bout à bout ou non.

Deux modes de réalisation de l'isolement thermique sont prévus dans cette technique. Le premier consiste à utiliser le fluide transporté comme isolant, en le faisant pénétrer à l'intérieur de la double paroi, et le deuxième consiste à loger dans cette double paroi un isolant tel qu'une mousse plastique.

Dans le premier mode de réalisation, le tube intérieur est mince et non étanche, et c'est alors le tube extérieur qui supporte la pression interne et doit donc avoir l'épaisseur voulue. Dans la mesure où le fluide transporté a une mauvaise conductibilité thermique, on comprend que c'est ce fluide lui-même qui fait fonction d'isolant et que la température du tube extérieur est peu influencée par la température du fluide transporté. Les problèmes de dilatation sont donc relativement faciles à résoudre. Le tube intérieur non étanche est percé d'orifices permettant le passage du fluide dans l'intervalle entre les deux tubes qui est ainsi rempli du fluide transporté.
Pour le tube intérieur non étanche, des coupures prévues permettent d'éviter les contraintes de dilatation.

Dans le deuxième mode de réalisation, c'est le contraire : le tube intérieur est épais et étanche et supporte seul la pression du fluide ; les éléments qui le constituent sont raccordés les uns aux autres par soudage. Le tube extérieur constitué d'éléments raccordés bout à bout de façon étanche par soudage est au contraire mince, car il ne supporte que la pression d'un gaz contenu dans la double paroi. Dans les deux modes de réalisation, des entretoises en forme de couronne maintiennent l'écartement entre les deux tubes de distance en distance. Ces entretoises sont percées de trous pour faciliter le remplissage de la double paroi par le gaz.

Dans le deuxième mode de réalisation, on rencontre de nouveau des problèmes de dilatation au niveau du tube intérieur et, si la température du fluide est relativement élevée, des dispositifs absorbeurs de dilatation doivent être prévus. De plus, des phénomènes de dilatation différentielle sont observés entre le tube extérieur moins chaud et le tube intérieur. Enfin, les deux modes de réalisation nécessitent l'assemblage sur chantier de chacune des deux canalisations concentriques avec mise en·place d'entretoises et exécution de nombreuses soudures qui doivent être parfaitement étanches.

Une solution a été proposée pour résoudre ces problèmes de dilatation différentielle dans le cas des tubes d'injection de vapeur dans les puits de pétrole pour accroître le taux de récupération de ce pétrole. Un article publié dans "Oil and gas Journal" 18 février 1980 p.103 à 107, décrit un tube à double paroi avec isolation thermique développé par General Electric Co sous la marque THERMOCASE.
Le tube extérieur en acier est à paroi épaisse et supporte les efforts mécaniques. L'assemblage est effectué au moyen de manchons à double filetage conique de façon bien connue. Le tube intérieur mince qui supporte de fortes variations de température est constitué de tronçons de longueur telle que la dilatation puisse jouer librement, l'étanchéité étant assurée par un dispositif spécial au niveau de la jonction interéléments. La jonction tube intérieur–tube extérieur est assurée, à chaque extrémité des éléments tubulaires, par un compensateur constitué par un tronçon de tube mince ondulé en Inconel. De cette façon, la vapeur qui circule à l'intérieur ne pénètre pas dans la double paroi. Celle-ci contient un isolant constitué par des bandes alternées de laine de verre et d'aluminium en feuille mince en atmosphère de krypton.
On comprend qu'un tel type de tube, s'il peut convenir pour des applications particulières, est d'un coût de fabrication beaucoup trop élevé pour pouvoir être utilisé dans des applications courantes telles que les réseaux d'eau chaude. De plus, les joints de dilatation constitués par des tubes minces ondulés ne résisteraient pas à des pressions différentielles importantes.

On a recherché un nouveau mode de réalisation des canalisations de transport de fluide qui permette une mise en place simple et rapide sans faire appel à un personnel très spécialisé.
On a recherché en particulier le moyen de supprimer la mise en place sur le chantier de montage de la couche d'isolation thermique de ces canalisations, et de son enveloppe de protection. On a recherché aussi la possibilité de supprimer les dispositifs compensateurs de dilatation, à intercaler le long des canalisations, ou tout au moins d'en réduire le nombre. On a recherché, enfin, la possibilité d'utiliser des matériaux d'isolation thermique à la fois efficaces et peu coûteux dont la qualité ne se dégrade pas de façon progressive avec le temps, et qui puissent être utilisés à des températures pouvant atteindre 100 à 200°C, ou même davantage.

Pour atteindre ces objectifs, on a recherché la possibilité de réaliser ces canalisations au moyen d'éléments de tubes préfabriqués entièrement en atelier, le montage des canalisations sur les chantiers se limitant à l'assemblage bout à bout de ces éléments, par tous moyens classiques de jonction, tels que soudures, brides, manchons d'accouplement ou autre.

Le nouvel élément de tube préfabriqué pour canalisation de transport de fluides à température différente de l'ambiante, qui fait l'objet de l'invention, comporte une double paroi réalisée au moyen de deux tubes métalliques concentriques, solidarisés entre eux au voisinage de chacune de leurs extrémités par une liaison rigide et étanche. De préférence un isolant thermique est logé dans l'intervalle compris entre les deux tubes. De préférence également, les diamètres, épaisseurs et caractéristiques mécaniques de chacun de ces tubes sont déterminés de façon que le rapport entre la force de traction longitudinale à exercer sur le tube extérieur considéré isolément, et la force de traction longitudinale à exercer sur le tube intérieur considéré isolément, pour obtenir dans les deux cas un même allongement élastique, soit compris entre 0,7 et 4,0 environ.

La description et les figures ci-après permettent de mieux comprendre les caractéristiques de l'invention ainsi que différents modes non limitatifs de réalisation de celle-ci.

La figure 1 représente un élément de tube préfabriqué, suivant l'invention, en coupe longitudinale, comportant une liaison par réduction rapportée.

La figure 2 représente un élément de tube préfabriqué, suivant l'invention, en coupe longitudinale, comportant une liaison par bague.

La figure 3 représente un élément de tube préfabriqué, suivant l'invention, en coupe longitudinale, comportant une liaison par rétreint du tube extérieur.

La figure 4 représente un élément de tube préfabriqué, suivant l'invention, en coupe longitudinale, comportant une liaison au niveau de la bride de jonction interéléments.

La figure 5 représente un élément de tube préfabriqué, suivant l'invention, en coupe longitudinale, comportant une extrémité renforcée pour canalisation bloquée.

La figure 6 représente un élément de tube préfabriqué, suivant l'invention, en coupe longitudinale, variante de la figure 5, à extrémités renforcées par manchons.

La figure 7 représente la jonction de deux éléments de tubes préfabriqués suivant l'invention, pour réaliser une canalisation, la jonction étant faite au niveau du tube intérieur.

La figure 8 représente une variante de la figure 7 dans laquelle la jonction est réalisée sur le tube intérieur en tulipe.

La figure 9 représente la jonction de deux éléments de tubes préfabriqués suivant l'invention, pour réaliser une canalisation, la jonction étant faite au niveau du tube intérieur par bride.

La figure 10 représente la jonction de deux éléments de tubes préfabriqués suivant l'invention, pour réaliser une canalisation, la jonction étant faite au niveau du tube extérieur.

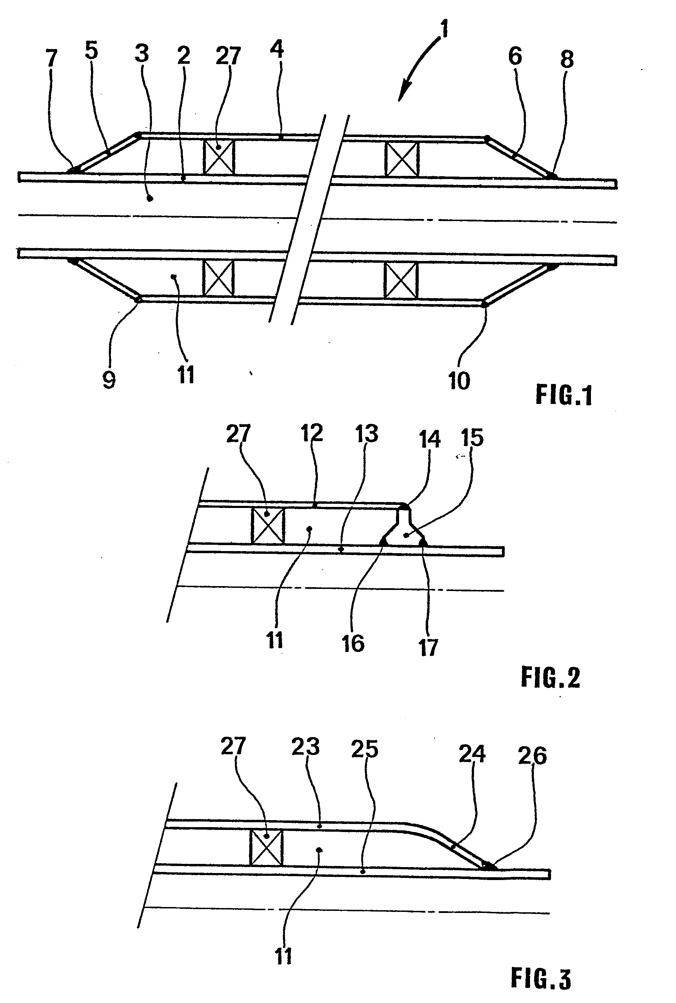

On voit figure 1, un élément de tube (1) suivant l'invention, représenté en coupe longitudinale, qui comporte un tube intérieur en acier (2) dans lequel circule le fluide (3) à transporter.
L'épaisseur de ce tube intérieur est calculée de façon qu'il ait une résistance mécanique suffisante, compte tenu de son diamètre et de la nuance d'acier utilisée pour supporter sans déformation permanente, la pression maximale prévue pour le fluide qui le parcourt.

Un tube extérieur (4) est disposé de façon concentrique au tube (2) et est lié mécaniquement, et de façon étanche et rigide à celui-ci, à chaque extrémité. Cette liaison est réalisée, comme le montre la figure 1, au moyen de deux pièces annulaires rapportées qui peuvent être par exemple des réductions (5) et (6) qui entourent le tube intérieur au voisinage de ses extrémités. Ces deux pièces annulaires sont solidarisées de façon étanche et rigide par des soudures annulaires, d'une part avec le tube intérieur en (7) et (8), et d'autre part avec les extrémités du tube extérieur en (9) et (10).

Une matière calorifuge, stable thermiquement à la température maximale du fluide (3) dans les conditions d'utilisation, remplit l'intervalle (11) entre les deux tubes. Cette matière est de préférence une substance inerte et stable à température élevée, sous forme pulvérulente, granulaire ou fibreuse telle que de la laine de verre, ou de laitier, de l'argile expansé, etc... Des complexes comportant des feuilles minces d'aluminium séparées par d'étroits intervalles remplis ou non par un isolant peuvent aussi être utilisés.

L'atmosphère gazeuse réalisée au contact de cette matière calorifuge peut être de l'air, de l'azote ou tout autre gaz approprié. Des précautions particulières doivent être prises pour prohiber la présence d'humidité à l'intérieur de la double paroi. Pour certaines applications, on peut envisager de réaliser le vide à l'intérieur de cette double paroi, et éventuellement d'entretenir celui-ci par un moyen de pompage raccordé à une canalisation reliée à un orifice ménagé dans la paroi du tube (4).

La jonction bout à bout de l'élément de tube préfabriqué suivant l'invention avec un autre élément est réalisée de façon très simple par l'une des nombreuses méthodes bien connues de l'homme de l'art.

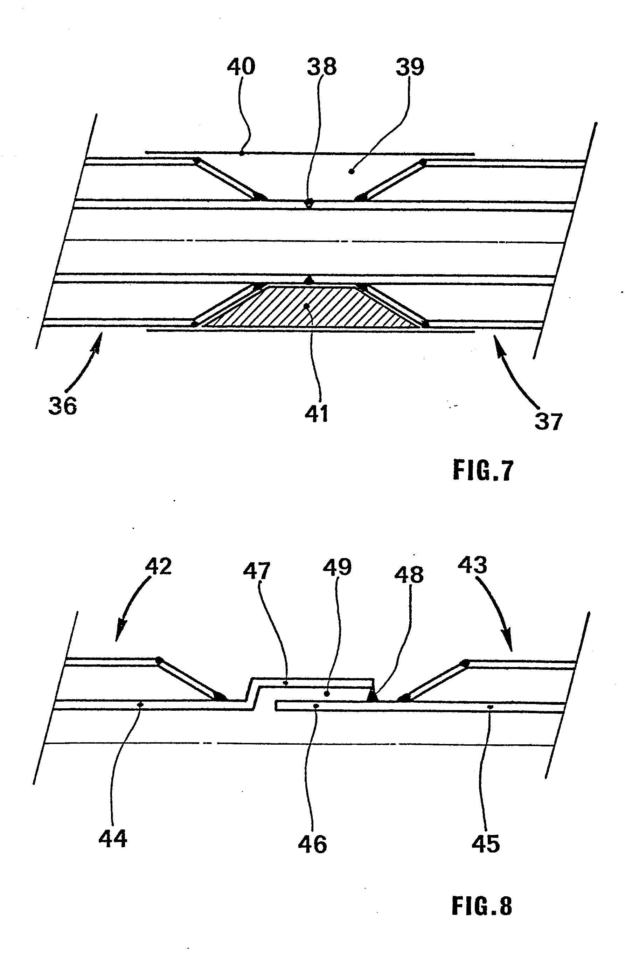

La jonction bout à bout d'éléments préfabriqués (1) constitue une canalisation. Des exemples de jonctions sont montrés aux figures 7 à 10. Des explications plus détaillées seront données ultérieurement.

Dans le cas de la figure 1, l'assemblage le plus courant d'éléments entre eux, pour constituer une canalisation, sera réalisé par soudage du tube intérieur.

Au lieu de soudage, l'assemblage peut être réalisé par exemple, par bride, par collage, par joint fileté ou par tout autre moyen connu de l'homme de l'art et jugé adéquat dans les conditions de service de la canalisation.

La liaison rigide entre le tube intérieur et le tube extérieur peut être réalisée de nombreuses façons différentes.

Ainsi dans le cas où la liaison est faite au moyen de pièces annulaires rapportées, celles-ci peuvent présenter différentes formes. Les réductions (5) et (6) de la figure 1 peuvent ainsi être par exemple des réductions coniques ou des réductions de forme spéciale de façon à faciliter le raccordement entre le tube intérieur (2) et le tube extérieur (4), ces réductions étant normalisées ou non normalisées.

La liaison rigide entre le tube intérieur et le tube extérieur peut aussi être réalisée, comme le montre la figure 2. Dans ce cas, la liaison du tube extérieur (12) avec le tube intérieur (13) est effectuée par soudage annulaire étanche (14) sur une bague (15), elle-même fixée par soudure annulaire en un ou deux points (16-17) sur le tube (13), au voisinage de ses extrémités suivant la forme de cette bague (forme en T ou autre).

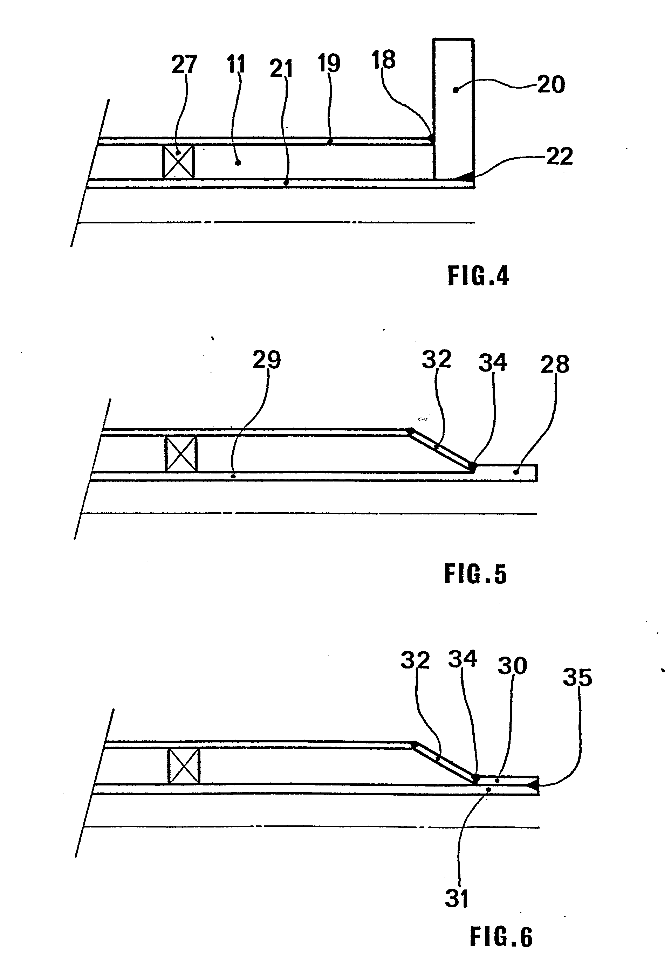

On peut également, comme le montre la figure 4, dans le cas où l'élément de tube comporte, comme moyen de jonction interélément, des brides, relier directement par soudure annulaire étanche (18), le tube extérieur (19) à la bride (20), elle-même solidaire du tube intérieur (21) par une soudure annulaire étanche (22). Une telle méthode a pour avantage de limiter les pertes thermiques dans les zones d'extrémités de chaque tube. Il est possible aussi de réaliser la liaison rigide tube intérieur-tube extérieur, sans utiliser de pièces annulaires rapportées telles que (5,6,15) en procédant à un rétreint des extrémités du tube extérieur afin de le souder directement sur le tube intérieur.

On voit figure 3 un tel mode de réalisation dans lequel le tube extérieur (23) comporte à son extrémité une zone (24) qui a été rétreinte, de façon que le diamètre d'entrée soit voisin du diamètre extérieur du tube intérieur (25). Il est alors possible de souder directement l'extrémité du tube extérieur avec le tube intérieur au moyen d'un cordon de soudure annulaire étanche (26).

On comprend aisément le comportement des tubes préfabriqués suivant l'invention lorsqu'ils sont parcourus par un fluide porté à une température différente de la température ambiante. Grâce au remplissage de l'intervalle (11) entre les deux tubes, par la matière calorifuge, le tube extérieur (4-12-19-23) demeure à une température proche de l'ambiante, tandis que le tube intérieur (2-13-21-25) est porté à une température très voisine de celle du fluide (3). On voit donc des contraintes apparaître, le tube extérieur faisant obstacle à la déformation longitudinale du tube intérieur. On comprend aisément que les variations de longueur de l'élément de tube préfabriqué suivant l'invention,en fonction de la température du fluide transporté, seront une résultante des contraintes ainsi exercées. Cette résultante dépendra du rapport des sections solides des deux tubes, et de leurs modules d'élasticité, ainsi que de l'écart de température entre les deux tubes.

Suivant un mode préférentiel de réalisation de l'invention, on donne au tube extérieur une épaisseur supérieure à celle qui serait nécessaire pour contenir l'isolant thermique et résister aux chocs au cours de la manutention. Dans le cas le plus général, où le tube intérieur est porté par le fluide transporté à une température comprise par exemple entre 100 et 200°C, le tube extérieur se trouvant à une température très notablement inférieure grâce à l'isolant thermique, on peut, en choisissant convenablement le rapport des épaisseurs, réduire de façon très importante l'allongement de l'élément de canalisation préfabriqué, par rapport à l'allongement libre qu'aurait pris un tube seul, correspondant au tube intérieur, dans les mêmes conditions thermiques. Cette réduction d'allongement se déduit par calcul en utilisant le rapport de forces donné précédemment, rapport qui varie préférentiellement de 0,7 à 4,0 environ. L'allongement pour ces valeurs extrêmes du rapport des forces correspond à environ 60% (rapport 0,7) et 20% (rapport 4,0) de l'allongement libre qu'aurait un tube seul, correspondant au tube intérieur, dans les mêmes conditions thermiques. Tout se passe comme si

-10-

l'élément de tube préfabriqué suivant l'invention était constitué d'un matériau dont le coefficient de dilatation longitudinal était inférieur à celui du métal qui constitue le tube intérieur.

Deux modes de réalisation de l'élément de tube suivant l'invention peuvent en particulier être mis en oeuvre pour atteindre un tel résultat.

Dans un premier mode de réalisation, le tube intérieur (2-13-21-25) et le tube extérieur (4-12-19-23) sont solidarisés à température ambiante par soudage, en l'absence de contraintes axiales, de l'un des deux tubes par rapport à l'autre. Dans ce cas, si les deux tubes sont réalisés dans la même nuance d'acier, et si ces tubes ont la même section solide, le calcul montre que le coefficient de dilatation longitudinale de l'ensemble, est égal au coefficient de dilatation du tube intérieur multiplié par 0,5 environ.

Dans un deuxième mode de réalisation, au moment de l'assemblage, on met en déformation élastique dans le sens axial l'un des deux tubes concentriques par rapport à l'autre, et on réalise dans ces conditions la liaison fixe des deux tubes entre eux au voisinage de chacune des deux extrémités.
On comprend qu'une fois la liaison réalisée, les deux tubes exerceront l'un sur l'autre par l'intermédiaire de cette liaison une contrainte qui maintiendra l'un d'entre eux en élongation élastique et l'autre en compression élastique à température ambiante.
Le calcul montre que, toutes choses égales par ailleurs, on peut, en optimisant la contrainte élastique à l'ambiante, obtenir à la température d'utilisation, une contrainte élastique au niveau de la liaison fixe qui est nettement inférieure à celle qui est obtenue dans le cas du premier mode d'assemblage.

Les exemples ci-après décrivent différents modes de réalisation de l'élément de tube préfabriqué suivant l'invention.

Exemple 1 :
On voit figure 1 un élément de tube préfabriqué (1) utilisé pour le transport d'eau chaude à 110°C sous une pression d'environ 30 bars. Le tube intérieur (2) de 219,1mm de diamètre nominal extérieur, 4,5 mm d'épaisseur de parois, est entouré d'un tube extérieur (4) concentrique de 323,9 mm de diamètre nominal extérieur et 4,0 mm d'épaisseur de paroi. L'élément a une longueur hors tout de 12 m.

Des cales isolantes rigides par exemple en bois telles que (27) disposées de façon annulaire maintiennent de distance en distance la concentricité des deux tubes. L'intervalle (11) entre les deux tubes est rempli d'une couche calorifuge de laine de verre. La liaison rigide entre les deux tubes est assurée au moyen de deux réductions (5-6) coniques reliées par des soudures annulaires étanches (7-8-9-10) au tube extérieur et au tube intérieur sans mise en contrainte préalable d'un tube par rapport à l'autre.

Le calcul montre qu'un tel élément de tube réalisé en un acier non allié de type courant pour de telles applications, à 225 MPa de limite élastique minimale garantie, présente un allongement longitudinal de 0,055 % lorsqu'il est parcouru par de l'eau à 110°C, la température du tube extérieur étant supposée à 20°C. Dans ces conditions, l'effort total exercé au niveau des liaisons fixes telles que (7-8-9-10) est de 550 kN environ.

Si au contraire, l'assemblage des deux tubes (2) et (4) est réalisé, en mettant en élongation de 0,09 % le tube intérieur (2) et en réalisant alors les liaisions (7-8-9-10), on constate, après relâchement de la contrainte d'extension, un raccourcissement de l'élément de tube (1) dans le sens longitudinal d'environ 0,04 %. Après mise en service, lorsque le tube intérieur est parcouru par de l'eau à 110°C, on observe à nouveau un allongement de 0,055% par rapport à la longueur initiale de l'élément préfabriqué, mais cette fois-ci l'effort au niveau des soudures (7-8-9-10) est ramené à environ 200 kN.

On voit donc que la précontrainte au moment de l'assemblage permet de réduire les contraintes en service de l'élément préfabriqué.

Les figures 5 et 6 représentent une variante qui peut être intéressante dans le cas des conduites dites bloquées, c'est-à-dire des conduites positionnées entre des points fixés empêchant la dilatation. Dans ce cas, pour permettre de supporter les contraintes qui se développeront au niveau de la jonction avec les autres éléments, sans dépasser la limite élastique sur la zone du tube intérieur située à l'extrémité, ladite zone d'extrémité (28) du tube intérieur

0071551

-12-

(29) comporte une surépaisseur. Cette surépaisseur peut être obtenue par un formage spécifique des extrémités lors du processus de fabrication du tube intérieur et dans ce cas est monobloc (figure 5) et soudée en (34) sur la réduction (32). Cette surépaisseur peut aussi être obtenue (figure 6) en rapportant une bague (30), emmanchée sur le tube intérieur (31) en extrémité, et soudée sur la réduction (32) en (34) et en extrémité de tube (35).

Différents modes de jonction bout à bout des éléments de tubes préfabriqués suivant l'invention peuvent être envisagés, et sont décrits sur les exemples suivants.

Exemple 2 :

La figure 7 représente un mode de jonction de type courant réalisée sur le tube intérieur.

Les deux éléments de tube (36) et (37), dont seule une zone d'extrémité est représentée, sont joints bout à bout par soudure annulaire étanche (38).

L'espace (39) ainsi créé, peut, selon les cas être laissé vide ou faire l'objet d'une protection spéciale, par exemple par manchon extérieur (40) prenant appui sur les tubes extérieurs, l'espace (39) étant rempli d'un isolant thermique en coquilles de forme, dont un élément est vu en coupe en (41), réalisées en mousse de polyuréthane par exemple.

La figure 8 représente une variante de jonction interéléments avec assemblage sur le tube intérieur. Ici, la jonction des deux éléments (42) et (43) est réalisée sur les tubes intérieurs (44-45) dont les extrémités ont été formées en tulipe de façon à réaliser un emmanchage mâle-femelle (46-47).

La liaison étanche entre les deux branches (46-47) peut être assurée par tous les moyens connus de l'homme de l'art, comme par exemple un soudage annulaire en (48), ou un collage, ou l'interposition d'un joint élastomère en forme de manchon avec lèvres d'étanchéité dans l'intervalle libre (49).

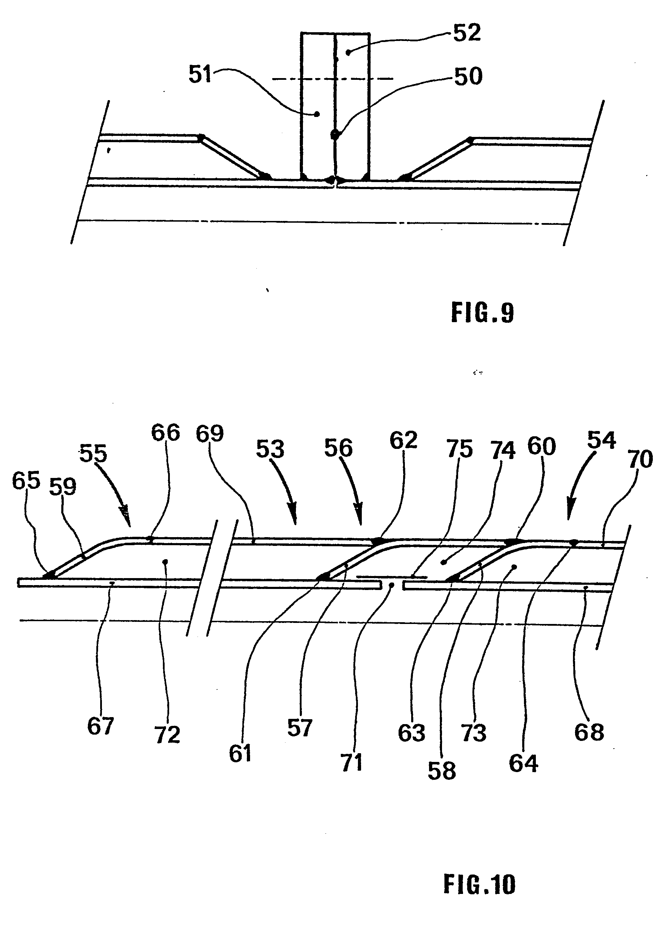

La figure 9 représente un autre mode de jonction possible d'éléments de tubes sur le tube intérieur, dans lequel un joint d'étanchéité

-13-

(50) est serré entre deux brides d'extrémité (51-52).

Exemple 3 :

Au lieu de l'assemblage bout à bout par les tubes intérieurs comme précédemment, on peut prévoir suivant la figure 10 un soudage réalisé au niveau du tube extérieur de deux éléments de tubes suivant l'invention (53) et (54).

Dans ce cas, l'élément de tube (53) selon l'invention est constitué de deux tubes concentriques solidarisés entre eux au voisinage de leurs extrémités par des pièces de liaison (57-59), les deux extrémités (55-56) n'étant pas symétriques l'une par rapport à l'autre, mais complémentaires, de façon à permettre de raccorder rigidement les deux éléments successifs (53-54), sur leur tube extérieur, par l'intermédiaire des pièces de liaisons (57) et (58).

Les pièces de liaison (57-58-59) sont avantageusement des pièces de réduction présentant à une extrémité une partie cylindrique de grand diamètre, ce diamètre étant sensiblement égal au diamètre des tubes extérieurs des éléments (53), et à l'autre extrémité une partie de diamètre réduit, sensiblement égal au diamètre extérieur du tube intérieur.

Ainsi, sur deux extrémités d'éléments successifs tels (53-54) les réductions sont montées de façon telle qu'elles puissent se souder facilement entre elles en (60) pour donner une jonction interélé- ·· ments étanche et rigide, tandis qu'elles sont soudées respectivement en (61-62) pour la réduction (57) et (63-64-65-66) pour les réductions (58-59) avec le tube intérieur (67-68) et le tube extérieur (69-70).

Du fait du montage non symétrique, mais complémentaire des réductions (57-59), c'est-à-dire d'un montage dans lequel les deux réductions sont orientées dans le même sens par rapport à l'axe de l'élément de tube, il n'y a pas de difficulté à réaliser les soudures de l'élément (53) et notamment, la soudure d'angle vif (61), celle-ci pouvant se faire avant positionnement du tube extérieur (69) lors de la fabrication dudit élément.

On s'arrange bien entendu pour que la partie de grand diamètre de la pièce de réduction (57) déborde l'extrémité du tube intérieur (67) de l'élément (53). Ceci permet de réaliser sans difficulté la jonction entre les deux éléments (53) et (54) par soudage en (60) de l'extrémité de grand diamètre de la pièce de réduction (57).

Comme on le voit, les tubes intérieurs (67) et (68) ne peuvent être raccordés dans un tel montage, et un intervalle étroit (71) est laissé entre leurs extrémités pour ne pas gêner l'assemblage. Un calorifuge analogue à ceux déjà décrits remplira les espaces annulaires (72) et (73).

L'espace annulaire (74) situé dans la zone d'extrémité pourra, suivant les cas, être laissé tel que, ou bien être rempli avec une matière non pulvérulente et inattaquable par l'eau chaude qui est susceptible de pénétrer dans cet espace. Cette matière pourra être constituée par exemple par des bandes gaufrées d'acier inoxydable introduites dans ce logement avant soudage.

On peut aussi, suivant les cas, prévoir l'interposition d'un manchon (75) recouvrant les tubes intérieurs (67-68) au niveau de l'intervalle (71).

Les éléments de tubes préfabriqués suivant l'invention, permettent en particulier le montage des canalisations de grande longueur ne comportant pas, vu leur conception et le faible coefficient de dilatation longitudinale, de dispositifs compensateurs de dilatation.

De très nombreux autres modes de réalisation des éléments de tubes suivant l'invention peuvent être envisagés qui demeurent compris dans le domaine de l'invention.

Les variantes peuvent par exemple porter sur les matériaux utilisés pour le tube intérieur, les matériaux utilisés pour le tube extérieur, lesdits matériaux n'étant pas nécessairement les mêmes, ou n'étant pas nécessairement traités de la même façon, sur les protections contre la corrosion des tubes intérieurs et extérieurs, sur les conditions de service, sur la forme des tubes.

De très nombreuses variantes peuvent aussi être proposées soit au niveau du mode de liaison entre tube extérieur et tube intérieur, soit à celui du mode de jonction des éléments de tubes entre eux.

On peut aussi proposer une grande variété de matériaux isolants à introduire dans la double paroi. Enfin, de très nombreuses méthodes peuvent être proposées pour mettre en précontrainte le tube intérieur par rapport au tube extérieur.

## REVENDICATIONS

1. Procédé de réalisation de canalisations de grande longueur, pour le transport de fluides à température différente de l'ambiante, permettant de réduire les variations de longueur provoquées par le passage de ces fluides, caractérisé en ce que l'on utilise des éléments de tubes préfabriqués qui comportent une double paroi formée de deux tubes métalliques concentriques solidarisés entre eux au voisinage de chacune de leurs extrémités par une liaison rigide et étanche.

2. Procédé suivant revendication 1, caractérisé en ce que l'on utilise des éléments de tubes préfabriqués dans lesquels la liaison rigide et étanche qui solidarise entre eux les deux tubes métalliques concentriques est réalisée au moyen d'une pièce annulaire rapportée.

3. Procédé suivant revendication 2, caractérisé en ce que l'on utilise des éléments de tubes préfabriqués dont la pièce annulaire rapportée est fixée par soudage.

4. Procédé suivant revendication 2 ou 3, caractérisé en ce que l'on utilise des éléments de tubes préfabriqués dont la pièce annulaire rapportée est une pièce de réduction.

5. Procédé suivant revendication 2 ou 3, caractérisé en ce que l'on utilise des éléments de tubes préfabriqués dont la pièce annulaire rapportée est une bague.

6. Procédé suivant revendication 1, caractérisé en ce que l'on utilise des éléments de tubes préfabriqués dans lesquels la liaison rigide et étanche est effectuée par rétreint du tube extérieur autour du tube intérieur puis soudage.

7. Procédé suivant l'une des revendications 1 à 6, caractérisé en ce que l'on utilise des éléments de tubes préfabriqués dans lesquels la double paroi contient un isolant thermique.

8. Procédé suivant l'une des revendications 1 à 7, caractérisé en ce que l'on utilise des éléments de tubes préfabriqués dans lesquels des cales sont disposées de façon annulaire dans la double paroi entre les deux tubes concentriques.

9. Procédé suivant l'une des revendications 1 à 8, caractérisé en ce que l'on utilise des éléments de tubes préfabriqués dans lesquels les extrémités du tube intérieur entre la liaison avec le tube extérieur et l'extrémité proprement dite sont renforcées en épaisseur, ce renforcement étant soit monobloc, soit effectué par pièce rapportée.

10. Procédé suivant l'une des revendications 1 à 9, caractérisé en ce que l'on utilise des éléments de tubes préfabriqués dans lesquels à température ambiante, l'un des deux tubes concentriques est en élongation élastique le long de l'axe, l'autre étant en compression élastique suivant le même axe.

11. Procédé suivant l'une des revendications 1 à 10, caractérisé en ce que l'on utilise des éléments de tubes préfabriqués dans lesquels les diamètres, épaisseurs et caractéristiques mécaniques, de chacun de ces tubes sont déterminés de façon que le rapport entre la force de traction longitudinale à exercer sur le tube extérieur considéré isolément, et la force de traction longitudinale à exercer sur le tube intérieur considéré isolément, pour obtenir dans les deux cas un même allongement élastique, est compris entre 0,7 et 4,0 environ.

12. Procédé suivant l'une des revendications 1 à 11, caractérisé en ce que l'on utilise des éléments de tubes préfabriqués dans lesquels la liaison entre le tube intérieur et le tube extérieur est réalisée au moyen de pièces de réduction placées aux extrémités, et orientées dans le même sens par rapport à l'axe de l'élément de tube, pour permettre la réalisation d'une canalisation dans laquelle les éléments préfabriqués sont soudés sur le diamètre correspondant sensiblement au diamètre du tube extérieur.

13. Procédé suivant l'une des revendications 1 à 12, caractérisé en ce que l'on utilise des éléments de tubes préfabriqués qui sont reliés les uns aux autres au niveau des extrémités des tubes intérieurs par bride, soudage, emmanchement, ou tout autre moyen connu.

14. Procédé suivant l'une des revendications 1 à 12, caractérisé en ce que l'on utilise des éléments de tubes préfabriqués qui sont reliés les uns aux autres au niveau du tube extérieur par bride, soudage, emmanchement, ou tout autre moyen connu.

15. Procédé suivant l'une des revendications 1 à 14, caractérisé en ce que l'on utilise des éléments de tubes préfabriqués dans lesquels un isolant thermique entoure les intervalles de jonction entre les éléments des tubes préfabriqués, avec ou sans manchonnage extérieur.

16. Procédé suivant revendication 15, caractérisé en ce que l'on utilise des éléments de tubes préfabriqués, dans lesquels un intervalle libre est laissé entre les deux extrémités consécutives de chaque tube intérieur.

17. Procédé suivant revendication 16, caractérisé en ce que l'on utilise des éléments de tubes préfabriqués, dans lesquels l'espace libre au niveau de la liaison entre le tube intérieur et le tube extérieur est rempli par un isolant thermique.

1·4

FIG.1

FIG.2

FIG.3

27  11  21  19  18                 20

                                    22

FIG.4

29              32  34  28

FIG.5

32  34  30  35

31

FIG.6

3·4

FIG.7

FIG.8

4·4

**FIG.9**

**FIG.10**

Office européen
des brevets

**RAPPORT DE RECHERCHE EUROPEENNE**

0071551
Numéro de la demande

EP 82 42 0106

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | F 16 L 59/16 |
| X | GB-A- 20 193 (FILMER) (AD 1914) <br> * figures 1-7 * | 1-17 | |
| | --- | | |
| X | FR-A- 516 602 (COLLAS) <br><br> * page 1, lignes 20-36; figure unique * | 1-5,7, 8,12-17 | |
| | ----- | | |

**DOMAINES TECHNIQUES RECHERCHES (Int. Cl. ³)**

F 16 L

Le présent rapport de recherche a été établi pour toutes les revendications

| Lieu de la recherche | Date d'achèvement de la recherche | Examinateur |
|---|---|---|
| LA HAYE | 03-11-1982 | ANGIUS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

OEB Form 1503. 03.82